# EUROPÄISCHE PATENTSCHRIFT

(11) **EP 1 719 364 B1**
(45) Veröffentlichungstag und Bekanntmachung des Hinweises auf die Patenterteilung: **05.08.2009**
(21) Anmeldenummer: 05706765.4
(22) Anmeldetag: 18.02.2005
(51) Int. Cl.: H04W 72/04

(54) **VERFAHREN ZUR HERSTELLUNG EINER KOMMUNIKATIONSVERBINDUNG IN EINEM KOMMUNIKATIONSNETZ**
METHOD FOR ESTABLISHING A COMMUNICATION LINK IN A COMMUNICATION NETWORK
PROCEDE PERMETTANT D'ETABLIR UNE LIAISON DE COMMUNICATION DANS UN RESEAU DE COMMUNICATION

(30) Priorität: 23.02.2004 DE 102004008711
(43) Veröffentlichungstag der Anmeldung: 08.11.2006
(73) Patentinhaber: Vodafone Holding GmbH, 40213 Düsseldorf (DE)
(72) Erfinder: ARNDT, Ulrich, 63225 Langen (DE)
(74) Vertreter: Müller, Thomas
(86) Internationale Anmeldenummer: PCT/DE2005/000279
(87) Internationale Veröffentlichungsnummer: WO 2005/084045

(56) Entgegenhaltungen:
- EP-A- 1 079 651
- GB-A- 2 336 070
- US-A1- 2002 085 520
- US-A1- 2003 013 471
- US-A1- 2003 044 016

## Beschreibung

Die vorliegende Erfindung betrifft ein Verfahren zur Herstellung einer Kommunikationsverbindung in einem Kommunikationsnetz gemäß dem Oberbegriff von Patentanspruch 1.

Moderne Kommunikationsnetze, wie beispielsweise Mobilfunknetze, die auf hohe Teilnehmerzahlen abzielen, werden typischer Weise zellular aufgebaut. Dies bedeutet, dass die gesamte zu versorgende Fläche in kleinere Funkzonen (Zellen) unterteilt wird. Um eine Störung von sich benachbarten Zellen vermeiden zu können, sind in einigen Kommunikationsnetzen so genannte Cluster eingeführt worden. Unter Cluster wird eine Gruppe einer bestimmten Anzahl von Zellen verstanden, auf die die zur Verfügung stehenden Funkkanäle aufgeteilt werden. Zusätzlich kann die Kapazität der Funknetze mittels hierarchischer Zellstrukturen erhöht werden, die eine Kombination aus Makro-, Mikro- und Picozellen darstellen.

Jeder Zelle eines zellularen Kommunikationsnetzes ist in der Regel eine Feststation, die auch als Basisstation bezeichnet wird, zugeordnet. Die einzelnen Basisstationen sind über so genannte "Base-Station-Controler" (BSC) mit Funkvermittlungsstellen verbunden, die auch als "Mobil-Switching-Center" (MSC) bezeichnet werden. Die MSC's dienen zum einen als Schnittstelle zwischen separaten Netzwerk-Basisstationen als auch zwischen dem hybriden Netzwerk und einem separaten Netzwerk, wie beispielsweise dem so genannten "Public-Switch-Telephone-Network" (PSTN). Weiterhin können in dem MSC, oder damit verbunden, Register und Authentifizierungsmittel vorgesehen sein.

Während es sich bei den Schnittstellen zwischen der Basisstation und dem BSC sowie zwischen dem BSC und der MSC in der Regel um Leitungsverbindungen handelt, stellt die so genannte Uₘ-Schnittstelle zwischen der Basisstation und den mobilen Endgeräten, die auch als Mobilstationen (MS) bezeichnet werden, eine Luftschnittstelle dar. Die Kommunikation über die Luftschnittstelle erfolgt mittels elektro-magnetischer Signale in vorgegebenen Kanälen, das heißt auf bestimmten Frequenzen innerhalb vorgegebener Frequenzspektren bzw. Frequenzbändern.

Während einer Sprachübertragung werden in der Regel zwei Kanäle belegt. Der erste, so genannte Uplink-Kanal, wird für Informationen von dem mobilen Endgerät zu der Basisstation verwendet und der zweite, so genannte Downlink-Kanal, wird für die Übertragung von der Basisstation zu dem mobilen Endgerät verwendet. Diese Kanäle liegen in der Regel in unterschiedlichen Frequenzbereichen, die zueinander beabstandet sind.

Die Kommunikation von einem mobilen Endgerät zu einem zweiten mobilen Endgerät erfolgt in herkömmlichen Netzwerken stets über mindestens eine Netzwerkkomponente, insbesondere über eine Basisstation. Diese Art der Kommunikation wird in den Kommunikationsnetzen auch bei mobilen Endgeräten verwendet, die sich in einer geringen Entfernung zueinander befinden. Die Anzahl von zur Verfügung stehenden Kanälen für die Kommunikation zwischen mobilen Endgeräten ist durch die Breite der Frequenzbänder, die für das Netzwerk lizenziert sind, limitiert. Hierdurch ist eine Obergrenze für die Anzahl der mobilen Endgeräte, die von einem Netz bedient werden können, gegeben. Um die Kapazität von Netzen zu steigern wird zum einem die bereits erwähnte hierarchische Zellstruktur und das Bilden so genannter Cluster verwendet.

In der US 6,415,146 B1 wird eine weitere Möglichkeit der Verringerung der Belastung von Netzwerkkomponenten vorgeschlagen. Hierbei wird zumindest ein mobiles Endgerät vorgesehen, dass in zwei Modi betrieben werden kann. Dieses Dualfunktionsgerät kann wahlweise in einen Normalmodus oder in einen Emulationsmodus gebracht werden. In dem Normalmodus erfolgt eine Kommunikation zwischen diesem mobilen Endgerät und einem weiteren mobilen Endgerät in der herkömmlichen Weise durch Übermittlung von Sprachsignalen von dem mobilen Endgerät zu einer Basisstation über den Uplink-Kanal, durch Weiterleitung des Signals mittels weiterer Netzwerkkomponenten, wie dem BSC und MSC an eine weitere Basisstation, in deren Umgebung, das heißt in deren Funkzelle, sich das weitere angerufene mobile Endgerät befindet.

Für die Kommunikation zwischen zwei mobilen Endgeräten, die sich in unmittelbarer Nähe zueinander befinden, wird gemäß der US 6,415,146 B1 vorgeschlagen, dass das mobile Endgerät mit Dualfunktion in einen vorübergehenden Basisstation-Emulationsmodus gebracht wird.

In diesem Basisstation-Emulationsmodus erfolgt die Kommunikation zwischen den beiden mobilen Endgeräten, indem das Dualfunktionsgerät Kontrollsignale von der Basisstation auf Frequenzen des Downlink-Kanalbereichs empfängt und Verkehrssignale auf Frequenzen in dem Uplink-Kanalbereich empfängt. Bei dieser Art der direkten Kommunikation wird die Anzahl der Kanäle, die für den Verkehr vom mobilen Endgerät zur Basisstation benötigt werden, reduziert. Insbesondere kann es ausreichen lediglich einen Luftschnittstellen-Kanal zwischen dem mobilen Endgerät und der Basisstation von lediglich einem Endgerät aus zur Verfügung zu stellen, während das weitere mobile Endgerät nicht mit der Basisstation kommuniziert. Durch die verringerte Anzahl an Luftschnittstellen-Kanälen kann eine größere Anzahl von Benutzern bedient werden ohne ein größeres Frequenzband zu benötigen.

Diese Art der Kommunikation in einem Kommunikationsnetz weist einige Nachteile auf. Nur eines der an der Kommunikation beteiligten mobilen Endgeräte arbeitet während der direkten Kommunikation auf einer anderen Frequenz als bei herkömmlicher Kommunikation. Bei dem weiteren mobilen Endgerät findet keine Frequenzänderung statt. Somit kann die Zuweisung von Frequenzen nicht flexibel und den Umständen entsprechend optimal erfolgen.

Aus der US 2003/013471 A1 ist weiterhin ein Kommunikationssystem für einen kontrollierten "Talk-Around-Modus" beschrieben. Bei diesem System soll ein Talk-Around-Modus realisiert werden, bei dem zwei Teilnehmereinheiten miteinander kommunizieren können, ohne das Kommunikationsnetz zu verwenden. Wird von einer Teilnehmereinheit der Aufbau einer direkten Kommunikation mit einer weiteren Teilnehmereinheit beantragt, so ermittelt eine Basisstation, ob eine solche Kommunikationsverbindung hergestellt werden kann. Hierbei werden potentielle Interferenzen mit anderen Nutzern des Kommunikationsnetzes berücksichtigt.

In der US 2003/044016 A1 werden ein Endgerät und ein System zur Steuerung und Anwendung von Kommunikationen beschrieben. Das Endgerät ist in einer Direktbetriebsart (direct mode of operation DMO) sowie in der Betriebsart mit Kanalverteilung (trunked mode of operation TMO) betreibbar. Zur Durchführung des DMO erhält das Endgerät einen Schlüssel, der zumindest die Betriebsfrequenz und eine vorbestimmte Nutzungsdauer beinhaltet. Der Nutzer muss für die Nutzung der Betriebsfrequenz eine Gebühr entrichten.

In der GB-A-2 336 070 wird ein System zur direkten Kommunikation beschrieben. Auch bei diesem System wird dem Nutzer die Verwendung der Frequenz für die direkte Kommunikation in Rechnung gestellt. Die Frequenzen für die direkte Kommunikation werden so gewählt werden, dass Interferenzen mit Nutzer, die über das Netzwerk kommunizieren vermieden werden können.

Aufgabe der vorliegenden Erfindung ist es daher ein Verfahren zu schaffen, dass einen flexiblen Aufbau von Kommunikationsverbindungen zwischen mobilen Endgeräten erlaubt, wobei die Verbindung zum einen einfach herzustellen seien soll, eine gewünschte Sicherheit aufweisen kann und zusätzlich die zur Verfügung stehenden Kommunikationskanäle optimal zugeteilt und dadurch optimal genutzt werden können.

Der Erfindung liegt die Erkenntnis zugrunde, dass die Aufgabe gelöst werden kann, indem für die Kommunikation zwischen den mobilen Endgeräten eine Frequenz gewählt wird, die sich von der Frequenz, auf der eine herkömmliche Kommunikation über Netzwerkkomponenten erfolgen würde, unterscheidet.

Erfindungsgemäß wird die Aufgabe daher gelöst durch ein Verfahren zur Herstellung einer Kommunikationsverbindung in einem Kommunikationsnetz, das zumindest eine Netzwerkkomponente und mindestens zwei mobile Endgeräte umfasst und in dem ein Frequenzbereich an einen Netzwerkbetreiber lizenziert ist, wobei die Kommunikationsverbindung direkt zwischen mindestens zwei der mobilen Endgeräte hergestellt werden soll. Das erfindungsgemäße Verfahren zeichnet sich dadurch aus, dass zur Überprüfung der Möglichkeit des Aufbaus einer direkten Kommunikationsverbindung durch ein erstes sendendes mobiles Endgerät (20) eine Anfrage direkt an mindestens ein weiteres mobiles Endgerät (21) über eine Frequenz, die in einem öffentlichen Frequenzbereich liegt, der außerhalb des an den Netzwerkbetreiber des Kommunikationsnetzes (1) lizenzierten Frequenzbereich liegt, gesendet und der Empfang von Antworten von dem mindestens einen weiteren mobilen Endgerät (21) überprüft wird, eine Frequenz für die direkte Kommunikationsverbindung zwischen einem ersten und mindestens einem weiteren mobilen Endgerät festgelegt wird, das erste mobile Endgerät (20) dem mindestens einen weiteren mobilen Endgerät (21) über mindestens eine Netzwerkkomponente (10, 11, 30) Angaben über die Frequenz für die direkte Kommunikation zu verwendende Frequenz und Verschlüsselung zur Verfügung stellt, eine Umschaltung auf diese Frequenz sowohl an dem ersten als auch mindestens an dem einen weiteren mobilen Endgerät erfolgt und die festgelegte Frequenz in einem öffentlichen Frequenzbereich liegt, der außerhalb des an den Netzwerkbetreiber des Kommunikationsnetzes (1) lizenzierten Frequenzbereich liegt.

Als Kommunikationsnetz im Sinne dieser Erfindung werden insbesondere Mobilfunknetze, wie zellulare Mobilfunknetze bezeichnet. Netzwerkkomponenten stellen hierbei netzseitige, in der Regel stationäre, Komponenten, wie Basisstationen, BSC, MSC dar. Als mobile Endgeräte können erfindungsgemäß nutzerseitige Endgeräte, wie Mobiltelefone, PDA's (Personal Digital Assistent), etc. verwendet werden, die zu Senden und Empfangen von elektromagnetischen Signalen ausgelegt sind. Weiterhin wird im Sinne dieser Erfindung die unmittelbare Verbindung von mobilen Endgeräten, die im Folgenden auch als direkte Kommunikation oder als Mobil-zu-Mobil-Kommunikation bezeichnet wird, über Luftschnittstellen realisiert, wobei die Kommunikation mittels elektromagnetischer Signale erfolgt. Durch das Festlegen und die Umschaltung auf eine Frequenz an allen mobilen Endgeräten, die an der mobilen Kommunikationsverbindung teilnehmen sollen, kann eine Reihe von Vorteilen erzielt werden. Insbesondere wird eine Verwendung von Frequenzen für die direkte Kommunikation realisiert werden, die nicht in dem Frequenzbereich des Netzwerkbetreibers liegen, sondern dem öffentlichen Frequenzbereich zugehören.

Die Netzwerkkomponenten, können beispielsweise das MSC oder aber auch das BSC sein.

Die Überprüfung der Möglichkeit des Aufbaus erfolgt vorzugsweise bezüglich der Verfügbarkeit des Benutzers des mindestens einen weiteren mobilen Endgerätes und/oder der Entfernung des mindestens einen weiteren mobilen Endgerätes zu dem ersten mobilen Endgerät.

In einer weiteren Ausführungsform kann neben der festgelegten Frequenz für die direkte Kommunikationsverbindung auch eine Verschlüsselung festgelegt werden, die für die direkte Kommunikation verwendet werden soll. In der Regel werden als Verschlüsselungsmethoden diejenigen verwendet, die für das Netzwerk, innerhalb dessen sich die mobilen Endgeräte befinden, eingesetzt werden. Hierbei können Encryption Keys zum Einsatz kommen. Prinzipiell sind alle Verschlüsselungsverfahren, die für das Netzwerk zum Beispiel für GSM oder UMTS vorgegeben sind, anwendbar.

Während der Kommunikation, die über die festgelegte Frequenz unmittelbar zwischen den beiden mobilen Endgeräten erfolgt, steht gemäß einer Ausführungsform zumindest ein mobiles Endgerät weiterhin mit zumindest einer Netzwerkkomponente in Verbindung. Diese Verbindung unterscheidet sich allerdings von der herkömmlichen Verbindung, die aus einem Uplink und einem Downlink-Kanal besteht. Für die Überwachung einer direkten Kommunikation zwischen mobilen Endgeräten ist eine Datenübertragung, die ausschließlich von einem mobilen Endgerät an die Basisstation erfolgt, ausreichend. Mittels solcher Daten kann beispielsweise der Status der Kommunikationsverbindung zwischen den mobilen Endgeräten an die Basisstation und damit an das Netzwerk mitgeteilt werden. Diese Informationen können beispielsweise für die Rechnungsstellung dienen. Weiterhin sind diese Informationen für das Netzwerk wesentlich, damit weitere Kommunikationsverbindung auf Frequenzen aufgebaut werden, die mit der noch verwendeten Frequenz nicht übereinstimmen. Eine Übertragung von Sprach-oder Kontrolldaten zwischen der Basisstation und dem mobilen Endgerät, die bei der herkömmlichen Kommunikation über Basisstationen erfolgt, bleibt bei einer direkten Kommunikation zwischen den mobilen Endgeräten allerdings aus.

Die Zustandsgrößen, die bezüglich des angerufenen mobilen Endgerätes ermittelt werden, bevor die Möglichkeit der direkten Verbindung überprüft wird, können die beispielsweise die Verfügbarkeit des angerufenen mobilen Endgerätes, dessen Entfernung zu dem ersten mobilen Endgerät sein. Die Zustandsinformationen über die Kommunikationsverbindung, die während der Kommunikation an die Netzwerkkomponente übermittelt werden, können beispielsweise die Information ob die Kommunikationsverbindung noch besteht oder beendet wurde sein. Weiterhin können diese Zustandsinformationen Angaben über die Qualität der Verbindung beinhalten.

Gemäß einer weiteren Ausführungsform erfolgt die Festlegung der Frequenz für die direkte Kommunikation über mindestens ein mobiles Endgerät. Bei dieser Ausgestaltung kann die Festlegung der Frequenz aufgrund von Zustandsgrößen bezüglich eines weiteren mobilen Endgerätes erfolgen. In diesem Fall kann das anrufende mobile Endgerät selber die geeignete Frequenz für die direkte Kommunikation festlegen. Alternativ kann der Benutzer des mobilen Endgerätes, das heißt der Anrufer, die Frequenz festlegen. Eine solche Festlegung kann beispielsweise aufgrund von Informationen, die im Vorfeld erhalten wurden, erfolgen.

Diese Informationen können beispielsweise eine Zuteilung einer bestimmten Frequenz für eine bestimmte Dauer von einer Vergabestelle sein.

Erfindungsgemäß wird die Möglichkeit des Aufbaus einer direkten Kommunikationsverbindung durch ein erstes sendendes mobiles Endgerät überprüft. In diesem Fall kann neben der geeigneten Frequenz für die direkte Kommunikation beispielsweise auch die Verfügbarkeit des gewünschten Kommunikationspartners ermittelt werden.

Die Überprüfung der Verfügbarkeit des gewünschten Kommunikationspartners erfolgt durch Senden einer Anfrage an mindestens ein weiteres mobiles Endgerät und durch die Überwachung des Empfangs von Antworten von dem mindestens einen weiteren mobilen Endgerät.

Die Umschaltung von der Frequenz, die zur Kommunikation über das Netzwerk verwendet wird, auf die Frequenz, die für die direkte Kommunikation verwendet werden soll, kann erfindungsgemäß durch die Benutzer der mobilen Endgeräte erfolgen. Dies weist den Vorteil auf, dass der Benutzer eines mobilen Endgerätes sich der Umschaltung der Frequenz bewusst ist, sodass beispielsweise ein bereits auf herkömmliche Weise begonnenes Gespräch nicht versehentlich unterbrochen wird. Zudem kann die Einstellung von Frequenzen zu dem gewünschten Zeitpunkt erfolgen, wenn beispielsweise ein Gesprächstermin vereinbart war. Zusätzlich können auf diese Weise geeignete Frequenzen außerhalb des an den Netzwerkbetreiber lizenzierten Frequenzbereichs, beispielsweise aus dem öffentlichen Frequenzbereich, verwendet werden.

Gemäß einer weiteren Ausführungsform stellt das erste mobile Endgerät dem mindestens einen weiteren mobilen Endgerät über mindestens eine Netzwerkkomponente Angaben über die Frequenz zur Verfügung, über die die direkte Kommunikation erfolgen soll. Die Übertragung der Angaben über die Frequenz erfolgt hierbei über die Netzwerkkomponenten, mit denen die mobilen Endeinrichtungen in Verbindung stehen. Der Vorteil dieser Übertragung liegt darin, dass Verschlüsselungsverfahren, die für die herkömmliche Netzwerkkommunikation vorgesehen sind, verwendet werden und somit eine gesicherte Übermittlung der Angaben an den gewünschten Kommunikationspartner gewährleistet ist. Die Übertragung kann beispielsweise in Form einer SMS erfolgen, die von dem Benutzer des ersten sendenden mobilen Endgerät an das zweite mobile Endgerät gesandt wird.

Um auch die Kommunikation während des Mobil-zu-Mobil-Kommunikationsmodus sicher gestalten zu können, kann zusätzlich zu der Frequenz auch eine Verschlüsselungsart festgelegt werden, die für die direkte Kommunikation verwendet werden soll, und die mobilen Endgeräte auf diese umgeschaltet werden. Eine solche Kommunikation ist insbesondere auf öffentlichen Frequenzspektren von Vorteil, da der Verschlüsselungscode beziehungsweise die Verschlüsselungsart ausschließlich den Kommunikationsteilnehmern im Vorfeld über das Netzwerk zugänglich gemacht wurde.

Auch bei dem Verfahren, bei dem die Festlegung der Frequenz über mindestens ein mobiles Endgerät erfolgt, kann die Verbindung zwischen den mobilen Endgeräten und dem Netzwerk, insbesondere den zugeordneten Basisstationen, nach der Herstellung der direkten Kommunikationsverbindung ganz oder teilweise unterbrochen werden. Auf diese Weise werden Kommunikationskanäle für weitere Benutzer des Kommunikationsnetzes frei.

Gemäß einer bevorzugten Ausführungsform wird die erfindungsgemäße Aufgabe gelöst durch ein Verfahren, das zumindest die folgenden Schritte umfasst:
- direktes Senden einer Verbindungsanfrage eines ersten sendenden mobilen Endgerätes an ein zweites mobiles Endgerät;
- Überprüfung des Erhalts dieser Verbindungsanfrage durch das zweite mobile Endgerät;
- direktes Senden einer Empfangsbestätigung vom zweiten mobilen Endgerät an das erste mobile Endgerät;
- Erhalt der Empfangsbestätigung an dem ersten mobilen Endgerät;
- Senden von Informationen bezüglich der für die direkte Kommunikationsverbindung zu verwendenden Frequenz über mindestens eine Netzwerkkomponente von dem ersten mobilen Endgerät an das zweite mobile Endgerät;
- Erhalt der Information über die zu verwendende Frequenz am zweiten mobilen Endgerät;
- Umschaltung auf die festgelegte Frequenz an beiden mobilen Endgeräten durch die Benutzer der beiden mobilen Endgeräte.

In der Regel werden für die Kommunikation über eine Luftschnittstelle zwei Arten von Kanälen verwendet. Der erste Kanal, der so genannte Verkehrskanal oder Nutzkanal, dient der Übertragung von Sprachfrequenzverkehr und der so genannte Kontrollkanal oder Paging-Kanal dient der Übertragung von Kontrollinformationen, die an der Basisstation und/oder an dem mobilen Endgerät verwendet werden können. Insbesondere dienen die Kontrollinformationen bei herkömmlichen Kommunikationsnetzen zum Herstellen einer Kommunikationsverbindung, zur Überwachung von Verbindungen und zum Steuern so genannter Zell-Wechsel-Vorgänge (Handover-Vorgänge), bei denen sich das mobile Endgerät von einer Zelle in eine nächste benachbarte Zelle bewegt. Bei den beschriebenen erfindungsgemäßen Ausführungsformen des Verfahrens stellt die festgelegte Frequenz vorzugsweise den Verkehrskanal für die direkte Kommunikation dar. Es liegt allerdings auch im Rahmen der Erfindung, dass sowohl der Verkehrskanal als auch der Kontrollkanal durch eine Netzwerkkomponente oder über die mobilen Endgeräte festgelegt und auf diese umgeschaltet wird.

Die Frequenzen, die für die direkte Kommunikation festgelegt werden, liegen im Frequenzbereich der öffentlichen Frequenzspektren. Durch diese Frequenzwahl wird die Kapazität des Netzwerkes, in dem sich die mobilen Endgeräte zur Herstellung der Kommunikationsverbindung befunden haben, erhöht. Zudem fallen für die Teilnehmer der Mobil-zu-Mobil-Kommunikation bei diesen Frequenzen keine zusätzlichen Kosten an.

Gemäß einer weiteren Ausführungsform kann mit dem erfindungsgemäßen Verfahren die direkte Kommunikation zwischen einem ersten und mindestens zwei weiteren mobilen Endgeräten hergestellt werden. Bei dieser Ausgestaltung kann eine Gruppe von Gesprächsteilnehmern eine Kommunikation auf einer eingestellten Frequenz ausführen. Diese kann zusätzlich durch ein Verschlüsselungsverfahren beziehungsweise einen Schlüssel, der ausschließlich den Gruppenmitgliedern mitgeteilt wurde, abgesichert werden.

Auf diese Weise kann beispielsweise von einem einzelnen Netzwerkbenutzer eine Anfrage an eine Vielzahl von gewünschten Gesprächspartnern über das Netzwerk gesendet werden, beispielsweise in Form einer SMS. In dieser Anfrage kann festgehalten sein zu welchem Zeitpunkt, auf welcher Frequenz und unter Verwendung welches Verschlüsselungsverfahrens eine direkte Kommunikationsverbindung hergestellt werden soll. Hierbei kann auch eine zeitlich begrenzte Verteilung von bestimmten Frequenzen genutzt werden. Der Vorteil dieser Art eines Gruppenrufs besteht für die Teilnehmer darin, dass wenn als Frequenz für die direkte Kommunikation eine Frequenz aus dem öffentlichen Frequenzspektrum gewählt wird, für das Gespräch keine Kosten anfallen. Lediglich die Übermittlung der Angaben zur Frequenz, dem Zeitpunkt des beabsichtigten Gespräches und gegebenenfalls dem Verschlüsselungsverfahren, die über das Kommunikationsnetz erfolgen sind kostenpflichtig.

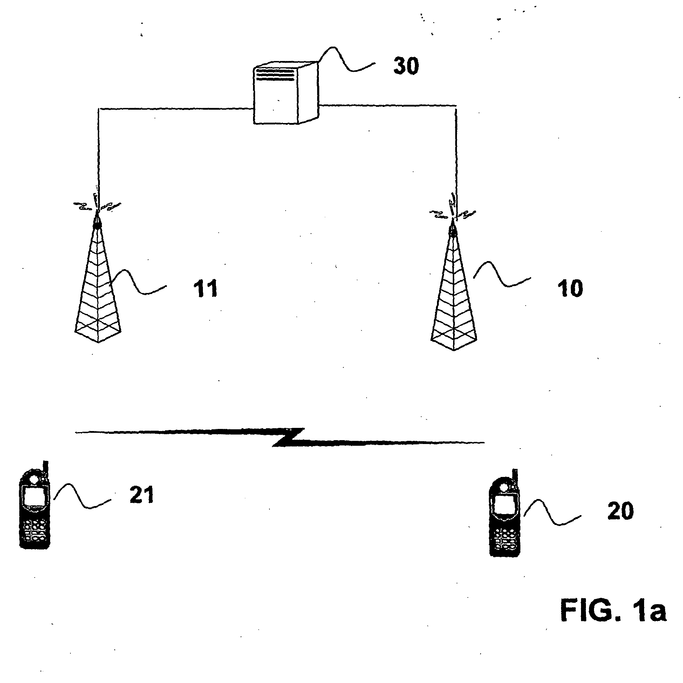

Die Erfindung wird im Folgenden anhand der beiliegenden Figuren genauer beschrieben, wobei
Figur 1a einen ersten Schritt zum Herstellen der Kommunikationsverbindung gemäß einer Ausführungsform des erfindungsgemäßen Verfahrens;

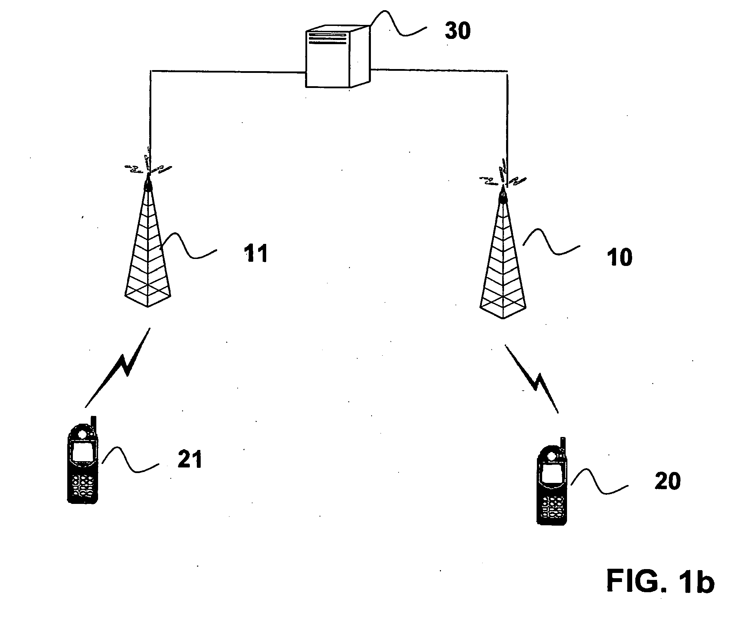

Figur 1b einen weiteren Schritt zum Herstellen der Kommunikationsverbindung gemäß einer Ausführungsform des erfindungsgemäßen Verfahrens; und

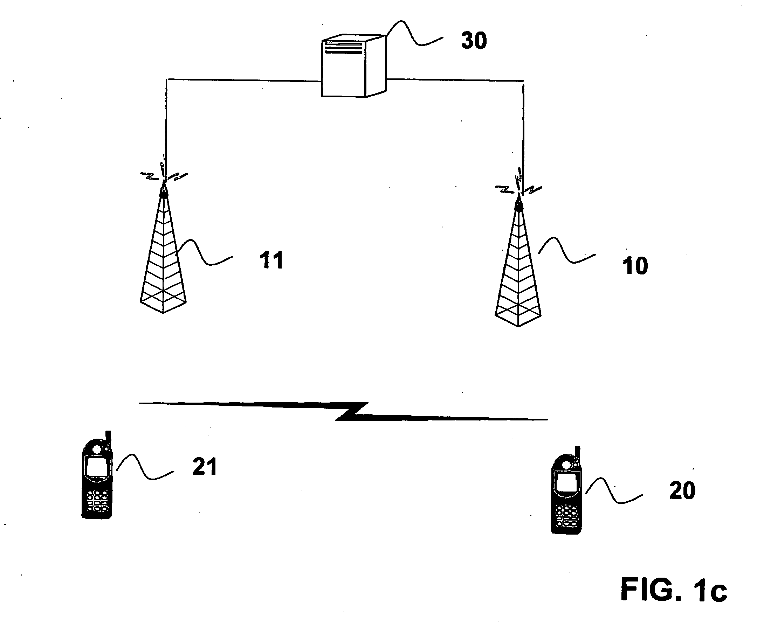

Figur 1c die hergestellte Kommunikationsverbindung gemäß der Ausführungsform des erfindungsgemäßen Verfahrens zeigt.

Da der Aufbau und die Bestandteile eines Kommunikationsnetzes hinreichend bekannt sind und je nach Ausgestaltung des Netzes variieren, sind in den Figuren lediglich beispielhaft die wesentlichen Komponenten eines Kommunikationsnetzes, insbesondere eines zellularen Mobilfunknetzes angedeutet. Gleiche Komponenten sind in den einzelnen Figuren mit den gleichen Bezugsziffern versehen und werden gegebenenfalls nur einmalig erläutert.

Unter Bezugnahme auf die Figuren 1a, 1b und 1c wird nun eine Ausführungsform des erfindungsgemäßen Verfahrens beschrieben.

Das Mobilfunknetz gemäß Figur 1 a umfasst ein Mobil-Switching-Center (MSC) 30 sowie damit verbundene Basisstationen 10 und 11. Über Luftschnittstellen stehen die mobilen Endgeräte 20 und 21, die in der dargestellten Ausführungsform Mobiltelefone darstellen, jeweils mit einer der Basisstationen 10, 11 in Verbindung (vgl. Figur 1b).

In den Figuren 1a bis 1c sind die unterschiedlichen Zustände während einer Ausführungsform des erfindungsgemäßen Verfahrens gezeigt. Diese Ausführungsform wird anhand der Herstellung einer gesicherten Mobil-zu-Mobil-Kommunikationsverbindung in dem öffentlichen Frequenzspektrums beschrieben.

Der Benutzer eines ersten mobilen Endgerätes 20 sendet eine Anfrage über das öffentliche Frequenzspektrum, dass er eine Kommunikation mit dem Benutzer des mobilen Endgerätes 21 herstellen will. Das mobile Endgerät 21 kann beispielsweise die MSISDN-Nummer identifiziert werden.

Falls der Benutzer des mobilen Endgerätes 21 in der Lage ist, die Anfrage zu empfangen, kann eine Mobil-zu-Mobil-Kommunikation hergestellt werden. In diesem Fall antwortet der Benutzer des zweiten mobilen Endgerätes 21 auf der gleichen Frequenz, auf der die Anfrage an ihn übermittelt wurde. Das mobile Endgerät 20 des ersten Benutzers erhält die Antwort. Diese Kommunikation zwischen den mobilen Endgeräten 20 und 21 ist in Figur 1a angedeutet.

Anschließend übermittelt, wie in Figur 1b gezeigt, der Benutzer des mobilen Endgerätes 20 oder das mobile Endgerät 20 selber dem Benutzer des zweiten mobilen Endgerätes 21 Informationen über die öffentlich verwendbare Frequenz und über die Verschlüsselungsmethode beziehungsweise den Schlüssel, der für die direkte Kommunikation verwendet werden soll. Die Übermittlung dieser Angaben erfolgt über das Kommunikationsnetzwerk 1. Hierzu wird die Information von dem mobilen Endgerät 20 an die Basisstation 10 und von dieser mittels des MSC 30 an die Basisstation 11 geleitet, die die Information an das mobile Endgerät 21 übermittelt.

Nachdem der Benutzer des zweiten mobilen Endgerätes 21 die Informationen bezüglich der zu verwendenden öffentlichen Frequenz und der Verschlüsselung empfangen hat, schalten beide Benutzer auf die vorgegebenen Frequenz und das vorgegebene Verschlüsselungsmittel (Figur 1c). Auf diese Weise kann eine direkte Mobil-zu-Mobil-Kommunikation auf dem öffentlichen Frequenzspektrum erzeugt werden, die aufgrund der vorherigen Übermittlung der Informationen von Frequenzen und Verschlüsselungen gesichert ist und nicht von Dritten gestört werden kann.

### Bezugszeichenliste

- 1: Kommunikationsnetz
- 10: Basisstation
- 11: Basisstation
- 20: mobiles Endgerät
- 21: mobiles Endgerät
- 30: Mobile Switching Center (MSC)

## Patentansprüche

1. Verfahren zur Herstellung einer Kommunikationsverbindung in einem Kommunikationsnetz (1), das zumindest eine Netzwerkkomponente (10, 11, 30) und mindestens zwei mobile Endgeräte (20, 21) umfasst und in dem ein Frequenzbereich an einen Netzwerkbetreiber lizenziert ist, wobei die Kommunikationsverbindung direkt zwischen mindestens zwei der mobilen Endgeräte (20, 21) hergestellt werden soll, **dadurch gekennzeichnet, dass** zur Überprüfung der Möglichkeit des Aufbaus einer direkten Kommunikationsverbindung durch ein erstes sendendes mobiles Endgerät (20) eine Anfrage direkt an mindestens ein weiteres mobiles Endgerät (21) über eine Frequenz, die in einem öffentlichen Frequenzbereich liegt, der außerhalb des an den Netzwerkbetreiber des Kommunikationsnetzes (1) lizenzierten Frequenzbereich liegt, gesendet und der Empfang von Antworten von dem mindestens einen weiteren mobilen Endgerät (21) überprüft wird, eine Frequenz für die direkte Kommunikationsverbindung zwischen einem ersten (20) und mindestens einem weiteren mobilen Endgerät (21) festgelegt wird, das erste mobile Endgerät (20) dem mindestens einen weiteren mobilen Endgerät (21) über mindestens eine Netzwerkkomponente (10, 11, 30) Angaben über die Frequenz für die direkte Kommunikation zu verwendende Frequenz und Verschlüsselung zur Verfügung stellt, eine Umschaltung auf diese Frequenz sowohl an dem ersten als auch an dem mindestens einen weiteren mobilen Endgerät (20, 21) erfolgt und die festgelegte Frequenz in einem öffentlichen Frequenzbereich liegt, der außerhalb des an den Netzwerkbetreiber des Kommunikationsnetzes (1) lizenzierten Frequenzbereich liegt.

2. Verfahren nach Anspruch 1, **dadurch gekennzeichnet, dass** zusätzlich zu der Frequenz auch eine Verschlüsselungsart festgelegt und auf diese umgeschaltet wird.

3. Verfahren nach einem der Ansprüche 1 oder 2, **dadurch gekennzeichnet, dass** nach der Umschaltung auf die Frequenz für die direkte Kommunikation die Übertragung zwischen dem ersten mobilen Endgerät (20) und mindestens einer Netzwerkkomponente (10) und zwischen dem mindestens einen weiteren mobilen Endgerät (21) und mindestens einer Netzwerkkomponente (11) reduziert wird.

4. Verfahren nach Anspruch 3, **dadurch gekennzeichnet, dass** die Übertragung zwischen mindestens einem mobilen Endgerät (20) und mindestens einer Netzwerkkomponente (10) und auf das Senden von Statusinformationen von mindestens einem mobilen Endgerät (20) an die Netzwerkkomponente (10) reduziert wird.

5. Verfahren nach Anspruch 1, wobei die Festlegung der Frequenz für die direkte Kommunikation über mindestens ein mobiles Endgerät (20, 21) erfolgt.

6. Verfahren nach Anspruch 5, **dadurch gekennzeichnet, dass** die Festlegung durch den Benutzer des mobilen Endgerätes (20, 21) an dem mobilen Endgerät (20, 21) oder durch das mobile Endgerät (20, 21) selber erfolgt.

7. Verfahren nach Anspruch 1 oder einem der Ansprüche 5 und 6, **dadurch gekennzeichnet, dass** die Umschaltung der Frequenz durch die Benutzer der mobilen Endgeräte (20, 21) erfolgt.

8. Verfahren nach Anspruch 1 oder einem der Ansprüche 5 bis 7, **dadurch gekennzeichnet, dass** zusätzlich zu der Frequenz auch eine Verschlüsselungsart festgelegt wird und auf diese umgeschaltet wird.

9. Verfahren nach Anspruch 1 oder einem der Ansprüche 5 bis 8, **dadurch gekennzeichnet, dass** nach dem Aufbau der direkten Kommunikationsverbindung zwischen den mindestens zwei mobilen Endgeräten (20, 21) die Übertragung zwischen dem ersten mobilen Endgerät (20) und mindestens einer Netzwerkkomponente (10) und zwischen dem mindestens einen weiteren mobilen Endgerät (21) und mindestens einer Netzwerkkomponente (11) beendet wird.

10. Verfahren nach Anspruch 1 oder einem der Ansprüche 5 bis 9, **dadurch gekennzeichnet, dass** das Verfahren zumindest folgende Schritte umfasst:
- direktes Senden einer Verbindungsanfrage eines ersten sendenden mobilen Endgerätes (20) an ein zweites mobiles Endgerät (21);
- Überprüfung des Erhalts dieser Verbindungsanfrage durch das zweite mobile Endgerät (21);
- direktes Senden einer Empfangsbestätigung vom zweiten mobilen Endgerät (21) an das erste mobile Endgerät (20);
- Erhalt der Empfangsbestätigung an dem ersten mobilen Endgerät (20);
- Senden von Informationen bezüglich der für die direkte Kommunikationsverbindung zu verwendenden Frequenz über mindestens eine Netzwerkkomponente (10, 11, 30) von dem ersten mobilen Endgerät (20) an das zweite mobile Endgerät (21);
- Erhalt der Information über die zu verwendende Frequenz am zweiten mobilen Endgerät (21);
- Umschaltung auf die festgelegte Frequenz an beiden mobilen Endgeräten (20, 21) durch die Benutzer der beiden mobilen Endgeräte (20, 21).

11. Verfahren nach einem der vorstehenden Ansprüche, **dadurch gekennzeichnet, dass** die festgelegte Frequenz den Verkehrskanal für die direkte Kommunikation darstellt.

12. Verfahren nach einem der vorstehenden Ansprüche, **dadurch gekennzeichnet, dass** die direkte Kommunikation zwischen einem ersten und mindestens zwei weiteren mobilen Endgeräten hergestellt wird.

## Claims

1. Method of establishing a communication link in a communication network (1) which comprises at least one network component (10, 11, 30) and at least two mobile terminals (20, 21) and wherein a frequency range is licensed to a network operator, wherein the communication link is to be established directly between at least two of the mobile terminals (20, 21), **characterised in that** in order to examine the possibility of creating a direct communication link an enquiry is sent directly by a first transmitting mobile terminal (20) to at least one other mobile terminal (21) using a frequency that is within a public frequency range which is outside the frequency range licensed to the network operator of the communication network (1), and the receiving of responses from the at least one other mobile terminal (21) is checked, a frequency for the direct communication link between a first (20) and at least one other mobile terminal (21) is specified, the first mobile terminal (20) provides information to the at least one other mobile terminal (21) through at least one network component (10, 22, 30) as to the frequency and encryption to be used for direct communication, a switchover to this frequency takes place both on the first and on the at least one other mobile terminal (20, 21) and the specified frequency is within a public frequency range which is outside the frequency range licensed to the network operator of the communication network (1).

2. Method according to claim 1, **characterised in that** in addition to the frequency a method of encryption is also specified and a switchover to this method of encryption is carried out.

3. Method according to one of claims 1 or 2, **characterised in that** after the switchover to the frequency for direct communication the transmission between the first mobile terminal (20) and at least one network component (10) and between the at least one other mobile terminal (21) and at least one network component (11) is reduced.

4. Method according to claim 3, **characterised in that** the transmission between at least one mobile terminal (20) and at least one network component (10) is reduced and to the transmitting of status information from at least one mobile terminal (20) to the network component (10).

5. Method according to claim 1, wherein the specification of the frequency for direction communication is carried out using at least one mobile terminal (20, 21).

6. Method according to claim 5, **characterised in that** the specification is carried out by the user of the mobile terminal (20, 21) on the mobile terminal (20, 21) or by the mobile terminal (20, 21) itself.

7. Method according to claim 1 or one of claims 5 and 6, **characterised in that** the switchover of the frequency is carried out by the users of the mobile terminals (20,21).

8. Method according to claim 1 or one of claims 5 to 7, **characterised in that** in addition to the frequency a method of encryption is also specified and a switchover to this method of encryption is carried out.

9. Method according to claim 1 or one of claims 5 to 8, **characterised in that** after the establishing of the direction communication link between the at least two mobile terminals (20, 21) the transmission between the first mobile terminal (20) and at least one network component (10) and between the at least one other mobile terminal (21) and at least one network component (11) is terminated.

10. Method according to claim 1 or one of claims 5 to 9, **characterised in that** the method comprises at least the following steps:
- direct transmission of a connection enquiry from a first transmitting mobile terminal (20) to a second mobile terminal (21);
- checking whether this connection enquiry has been received by the second mobile terminal (21);
- direct sending of a confirmation of receipt by the second mobile terminal (21) to the first mobile terminal (20);
- receipt of the confirmation of receipt at the first mobile terminal (20);
- transmission of information regarding the frequency to be used for the direct communication link via at least one network component (10, 11, 30) from the first mobile terminal (20) to the second mobile terminal (21);
- receipt of the information as to the frequency that is to be used at the second mobile terminal (21);
- switchover to the specified frequency at both mobile terminals (20, 21) by the users of the two mobile terminals (20, 21).

11. Method according to one of the preceding claims, **characterised in that** the specified frequency constitutes the traffic channel for direct communication.

12. Method according to one of the preceding claims, **characterised in that** the direct communication is established between a first and at least two other mobile terminals.

## Revendications

1. Procédé permettant d'établir une liaison de communication dans un réseau de communication (1), qui comprend au moins un composant de réseau (10, 11, 30) et au moins deux appareils terminaux mobiles (20, 21), et dans lequel une plage de fréquences est concédée sous licence à un opérateur de réseau, la liaison de communication devant être établie directement entre au moins deux des appareils terminaux mobiles (20, 21), **caractérisé en ce que** pour vérifier la possibilité d'établir une liaison de communication directe, une demande est envoyée directement par un premier appareil terminal mobile émetteur (20) à au moins un appareil terminal mobile supplémentaire (21) sur une fréquence qui se trouve dans une plage de fréquences publique se trouvant en dehors de la plage de fréquences concédée sous licence à l'opérateur de réseau du réseau de communication (1) et la réception des réponses par le au moins un appareil terminal mobile supplémentaire (21) est vérifiée, une fréquence pour la liaison de communication directe entre un premier (20) et au moins un appareil terminal mobile supplémentaire (21) est déterminée, le premier appareil terminal mobile (20) met à disposition du au moins un appareil terminal mobile supplémentaire (21) par au moins un composant de réseau (10, 11, 30) des données sur la fréquence pour la fréquence à utiliser pour la communication directe et un chiffrement, une commutation sur cette fréquence est effectuée tant sur le premier que le au moins un appareil terminal mobile (20, 21) et la fréquence déterminée se trouve dans une plage de fréquences publique se trouvant en dehors de la plage de fréquences concédée sous licence à l'opérateur de réseau du réseau de communication (1).

2. Procédé selon la revendication 1, **caractérisé en ce qu'**en plus de la fréquence, un type de chiffrement est déterminé et la commutation est effectuée sur celle-ci.

3. Procédé selon l'une des revendications 1 ou 2, **caractérisé en ce qu'**après la commutation sur la fréquence pour la communication directe, la transmission est réduite entre le premier appareil terminal mobile (20) et au moins un composant de réseau (10) et entre le au moins un appareil terminal mobile supplémentaire (21) et au moins un composant de réseau (11).

4. Procédé selon la revendication 3, **caractérisé en ce que** la transmission est réduite entre au moins un appareil terminal mobile (20) et au moins un composant de réseau (10) et à l'envoi des informations d'état d'au moins un appareil terminal mobile (20) au composant de réseau (10).

5. Procédé selon la revendication 1, dans lequel la détermination de la fréquence pour la communication directe s'effectue sur au moins un appareil terminal mobile (20, 21).

6. Procédé selon la revendication 5, **caractérisé en ce que** la détermination est effectuée par l'utilisateur de l'appareil terminal mobile (20, 21) sur l'appareil terminal mobile (20, 21) ou par l'appareil terminal mobile (20, 21) lui-même.

7. Procédé selon la revendication 1 ou l'une quelconque des revendications 5 et 6, **caractérisé en ce que** la commutation de la fréquence est effectuée par l'utilisateur des appareils terminaux mobiles (20, 21).

8. Procédé selon la revendication 1 ou l'une quelconque des caractéristiques 5 à 7, **caractérisé en ce qu'**en plus de la fréquence, un type de chiffrement est déterminé et la commutation est effectuée sur celle-ci.

9. Procédé selon la revendication 1 ou l'une quelconque des revendications 5 à 8, **caractérisé en ce qu'**après avoir établi la liaison de communication directe entre les au moins deux appareils terminaux mobiles (20, 21), la transmission est terminée entre le premier appareil terminal mobile (20) et au moins un composant de réseau (10) et entre le au moins un appareil terminal mobile (21) et au moins un composant de réseau (11).

10. Procédé selon la revendication 1 ou l'une quelconque des revendications 5 à 9, **caractérisé en ce que** le procédé comprend au moins les étapes suivantes :
- envoi d'une demande de liaison d'un premier appareil terminal mobile émetteur (20) à un second appareil terminal mobile (21) ;
- vérification de la réception de cette demande de liaison par le second appareil terminal mobile (21) ;
- envoi direct d'un accusé de réception du second appareil terminal mobile (21) au premier appareil terminal mobile (20) ;
- réception d'un accusé de réception par le premier appareil terminal mobile (20) ;
- envoi des informations concernant la fréquence à utiliser pour la liaison de communication directe par au moins un composant de réseau (10, 11, 30) du premier appareil terminal mobile (20) au second appareil terminal mobile (21) ;
- réception des informations concernant la fréquence à utiliser par le second appareil terminal mobile (21) ;
- commutation sur la fréquence déterminée sur les deux appareils terminaux mobiles (20, 21) par l'utilisateur des deux appareils terminaux mobiles (20, 21).

11. Procédé selon l'une quelconque des revendications précédentes, **caractérisé en ce que** la fréquence déterminée constitue le canal de trafic pour la communication directe.

12. Procédé selon l'une quelconque des revendications précédentes, **caractérisé en ce que** la communication est établie entre un premier et au moins deux autres appareils terminaux mobiles.
